# EUROPÄISCHE PATENTANMELDUNG

(11) **EP 0 674 981 A1**
(43) Veröffentlichungstag der Anmeldung: **04.10.1995**
(21) Anmeldenummer: 95104439.5
(22) Anmeldetag: 25.03.1995
(51) Int. Cl.: B28D 1/18, B23Q 15/02, B24B 9/00

(54) **Vorrichtung zum Bearbeiten von Betonröhren**

(30) Priorität: 31.03.1994 DE 9405516 U
(71) Anmelder: DAUM + PARTNER Maschinenbau GmbH, D-88317 Aichstetten (DE)
(72) Erfinder: Daum, Hans-Jürgen, D-88317 Aichstetten (DE)
(74) Vertreter: Pfister, Helmut, Dipl.-Ing.

(57) **Zusammenfassung**

Der Außenumfang des Endes einer Betonröhre (2) wird durch ein Fräswerkzeug (4) bearbeitet. Das Fräswerkzeug umwandert auf einer Kreisbahn das Rohrende. Das Fräswerkzeug ist dabei in zwei Richtungen beweglich, und zwar in Abhängigkeit von einer CNC-Steuerung. Durch eine Meßeinrichtung (5), die vor der Bearbeitung in das Innere des Betonrohres eingeführt wird, werden durch Ultraschallmessungen die inneren Abmessungen und damit die Höhen- und Seitenlage der Rohrmittelachse gemessen.

## Beschreibung

Die Erfindung betrifft eine Vorrichtung zum Bearbeiten von Betonröhren, insbesondere zum Rundfräsen des Endbereiches eines Rohres, der in eine Endmuffe eines Nachbarrohres einschiebbar ist.

Betonröhren, beispielsweise solche, die für Abwässerkanäle verwendet werden, müssen häufig auf dem Außenumfang im Endbereich bearbeitet werden, um die Verbindung der Rohre mit den Nachbarrohren zu verbessern und insbesondere die Dichtigkeit zu erhöhen. Während häufig auf dem Innenumfang der Endmuffe eine Dichtung angeordnet wird und auch der Muffenbereich in der Regel eine größere Maßhaltigkeit aufweist, ist die Genauigkeit des anderen Endes eines Betonrohres oft unbefriedigend. Dies ist im allgemeinen eine Folge der Art der Herstellung des Betonrohres. Manchmal tritt auch das Problem auf, daß ein vorhandenes Rohr gekürzt werden muß. Auch hier muß das Ende des Betonrohres bearbeitet werden.

Die Bearbeitung geschieht mit üblichen Fräswerkzeugen, die einen Endabschnitt zylindrischer Form mit genauem Außendurchmesser herstellen. In manchen Fällen sind im Endabschnitt aber auch Abstufungen anzuordnen, die dann mit der Dichtung der Endmuffe des Nachbarrohres zusammenwirken.

Es ist bekannt, das zu bearbeitende Rohr auf antreibbaren Rollen oder Walzen anzuordnen und das Rohr während der Bearbeitung zu drehen. Das Fräswerkzeug liegt dabei während der Bearbeitung still. Die unvermeidbaren Abweichungen von der Zylinderform des Rohres wirken sich hierbei auch auf die Güte des Fräsvorganges aus.

Der Erfindung liegt die Aufgabe zugrunde, eine Anordnung zu treffen, bei der die Bearbeitung eines Rohrendes einen Abschnitt, insbesondere einen zylindrischen Abschnitt mit hoher Genauigkeit ergibt.

Zur Lösung dieser Aufgabe schlägt die Erfindung die im Anspruch 1 beschriebenen Maßnahmen vor.

Im Gegensatz zu den bekannten Vorrichtungen bewegt sich bei der Erfindung das Rohr nicht, sondern das Fräswerkzeug wandert auf einer Kreisbahn um das zu bearbeitende Rohrende. Für diese Bewegung ist zunächst die genaue Lage der Mittelachse des Rohres zu finden. Diese Aufgabe löst die Meßeinrichtung. Die Meßeinrichtung, die an sich eine beliebige Ausgestaltung aufweisen kann, wird in das Ende des Rohres eingeschoben und mißt in mindestens drei radialen Richtungen den Abstand der Rohrinnenwandung von der Lage der Meßeinrichtung. Dabei ist es nicht notwendig, daß sich die Meßeinrichtung genau im Zentrum des Rohres befindet. Kleine Abweichungen sind ohne Nachteil. Aus den ermittelten, etwa radialen Maßen zwischen der Meßeinrichtung und der Rohrinnenwandung kann der Computer leicht die Lage der Rohrmittelachse ermitteln, und zwar auch dann, wenn die Innenwandung keine exakte Zylinderform aufweist.

Insbesondere dann, wenn die Meßelemente der Meßeinrichtung in zwei zueinander senkrechten Richtungen die Abstände zur Rohrinnenwandung messen, also beispielsweise einen waagrechten und einen senkrechten Durchmesser ermitteln, läßt sich die Anordnung der Rohrmittelachse mit hoher Genauigkeit ermitteln. Die gefundenen Durchmesserwerte werden halbiert, und zwar in jeder Richtung, also zum Beispiel in der horizontalen und in der senkrechten Richtung getrennt. Auf diese Weise erhält die CNC-Steuerung einen genauen Ausgangswert, der die Lage der Rohrmittelachse angibt.

Ist der Meßvorgang abgeschlossen, steuert die CNC-Steuerung der Steuereinrichtung das Fräswerkzeug sinngemäß in der X- und in der Y-Achse, so daß das Fräswerkzeug eine exakte Kreisbahn beschreibt, mit der Rohrmittelachse als Zentrum.

Bei der Erfindung ist von besonderem Vorteil, daß die Kreisbahn des Fräswerkzeuges ohne weiteres verschiedenen Rohrdurchmessern anpaßbar ist. Zum mittleren Innendurchmesser, den die Meßeinrichtung ermittelt, ist nur die Wandstärke des Betonrohres zu addieren, um die für das Fräswerkzeug erforderliche Bahn zu bestimmen.

Weitere vorteilhafte Ausgestaltungen der Erfindung ergeben sich aus den Unteransprüchen.

In der Zeichnung ist ein Ausführungsbeispiel der Erfindung schematisch dargestellt. Es zeigen:
- Fig. 1: eine Vorderansicht einer erfindungsgemäßen Vorrichtung in der Betriebsstellung der Meßeinrichtung,
- Fig. 2: eine Draufsicht auf die Vorrichtung nach der Fig. 1,
- Fig. 3: eine Vorderansicht der Vorrichtung in der Betriebsstellung der Fräseinrichtung,
- Fig. 4: eine Draufsicht auf die Vorrichtung nach der Fig. 3 und
- Fig. 5: eine schematische Darstellung der Steuereinrichtung.

Das Betonrohr 2 liegt auf dem Maschinengestell 1, das auch die wesentlichen Teile der Vorrichtung aufnimmt. Das Maschinengestell 1 umfaßt ein Untergestell 10 für den Schlitten 3. Es sind Schienen 12 für den Schlitten 3 vorgesehen sowie eine Spindel 18, die vom Motor 19 angetrieben wird. Die Spindel 18 dient zur Verschiebung des Schlittens 3 auf dem Untergestell 10. Die Bälge 11 decken jeweils die Führungen, also die Schienen sowie die Spindeln ab.

Das Gestell 1 umfaßt ferner Rollen 15, auf denen das Betonrohr 2 aufliegt. Durch diese Rollen wird die Verschiebung und Ausrichtung des Rohres 2 erleichtert. Ein Anschlagarm 16 trägt einen Anschlag 17, der die gewünschte Lage des vorderen Endes 20 des Rohres bestimmt.

Am anderen Ende 21 des Rohres ist eine Endmuffe 22 vorgesehen, die einen solchen Durchmesser besitzt, daß sie das Ende 20 übergreifen kann. Die Endmuffe umfaßt eine Dichtung 23, die beispielsweise bei der Herstellung des Betonrohres eingesetzt wird und fest mit der Muffe verbunden ist.

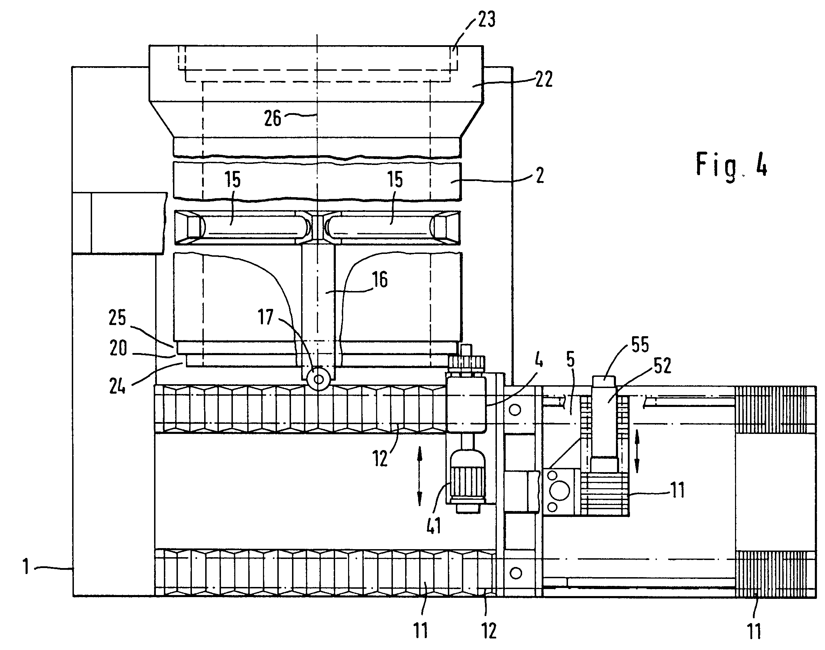

Nach der Bearbeitung (s. Fig. 4) ist im Endbereich ein Umfangsteil 24 gefräst. Es kann auch eine Abstufung 25 angeordnet werden, die mit der Dichtung 23 zusammenwirkt.

Die Mittelachse des Rohres ist mit 26 bezeichnet.

Das Maschinengestell 1 umfaßt ferner einen Ständer 6, der am oberen Ende einen Arm 60 trägt für die Führung eines Halters 61, der durch eine Preßeinrichtung 62 gegen den oberen Umfang des Rohres 2 drückbar ist. Auf diese Weise kann das Betonrohr 2 in der Bearbeitungsstellung fixiert werden, was die Bearbeitungsgenauigkeit erhöht.

Die Spindelmuttern 31 am unteren Ende des Schlittens 3 wirken mit der Spindel 18 des Maschinengestelles 1 zusammen.

Der Schlitten 3 trägt einen Ständer 30 mit zwei senkrechten Führungsbahnen 32 und 35. Die Führungsbahn 32 ist auf der Vorderseite, also in der Darstellung der Zeichnung auf der linken Seite, angeordnet und führt den Schlitten 4 des Fräswerkzeuges 40. Der Schlitten 4 wirkt mit einer Spindel 34 zusammen, die vom Motor 33 angetrieben wird, wodurch der Schlitten 4 mit dem Fräswerkzeug in der Höhe verstellbar ist.

Während der Schlitten 4 auf der Vorderseite des Ständers 30 angeordnet ist, ist die Führung 35 mehr der Rückseite des Ständers zugeordnet. Diese Führung 35 trägt den Schlitten 5 für die Meßeinrichtung 52. Es ist eine Spindel 37 vorgesehen, die durch den Motor 36 angetrieben wird, so daß der Schlitten 5 ebenfalls in der Höhe verstellbar ist.

Der Schlitten 5 umfaßt eine Führung 50 für einen Träger 51, wobei dieser Träger mittels des Motors 53 in horizontaler Richtung und koaxial zur Mittelachse 26 beweglich ist. Die Meßeinrichtung 52 mit den Meßelementen 55 kann daher in Richtung der Mittelachse 26 vorgeschoben und zurückgezogen werden.

In ähnlicher Weise ist auch auf dem Schlitten 4 des Fräswerkzeuges ein Träger 42 vorgesehen, und mittels des Motors 43 ist es möglich, das Fräswerkzeug 40 mit dem Antriebsmotor für das Fräswerkzeug in Richtung der Achse 26 zu verschieben.

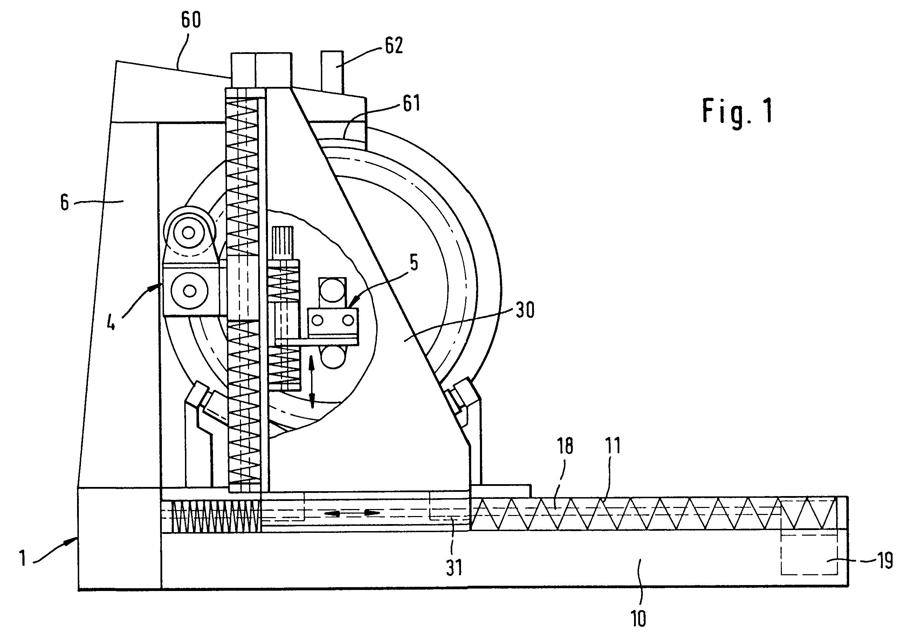

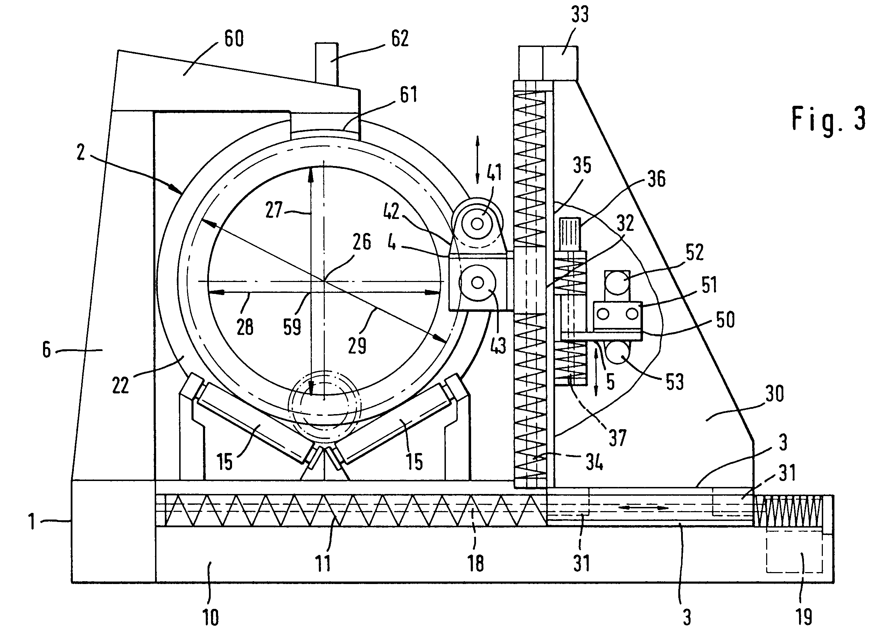

Zu Beginn der Bearbeitung des Endes 20 des Rohres 2 wird zunächst der Schlitten 3 mit allen zugehörigen Einrichtungen in eine Stellung gebracht, wie diese in der Fig. 1 gezeigt ist. Dazu wird der Motor 19 betätigt, der den Schlitten 3 in diese Stellung bringt, wobei sich die Meßelemente 55 der Meßeinrichtung 52 etwa in der Mittelachse 26 oder in der Nähe davon befinden. Die Markierung 59 gibt beispielsweise die Stelle an, in der sich die Meßelemente 55 befinden (vgl. Fig. 3). Die Meßeinrichtung 52 ist dabei in das Ende 20 des Rohres eingeschoben.

Die Meßelemente 55 messen nun in radialer Richtung den Durchmesser 28 aus und in senkrechter Richtung den Durchmesser 27. Die Meßelemente führen dabei beispielsweise eine Ultraschallmessung durch. Jeder Durchmesser setzt sich aus zwei Radien unterschiedlicher Länge zusammen, und es ist leicht feststellbar bzw. durch die CNC-Steuerung der Steuereinrichtung 7 bestimmbar, wo sich die Mittelachse 26 hinsichtlich der Stelle 59 befindet. Dazu ist es nur notwendig, jeden Durchmesser 27 und 28 zu halbieren, um die Lage der Mittelachse 26 zu bestimmen. Auf diese Weise erhält die CNC-Steuerung ein Kommando bzw. ein Signal, das die richtige Lage der Mittelachse 26 angibt. In der Regel genügt ein einziger Meßvorgang zur Ermittlung der Radien für die Durchmesser 28 und 27.

Anstelle einer Ultraschallmessung können auch andere Meßmethoden verwendet werden. Es hat sich jedoch gezeigt, daß eine Ultraschallmessung relativ einfach ist und verwertbare Ergebnisse bringt.

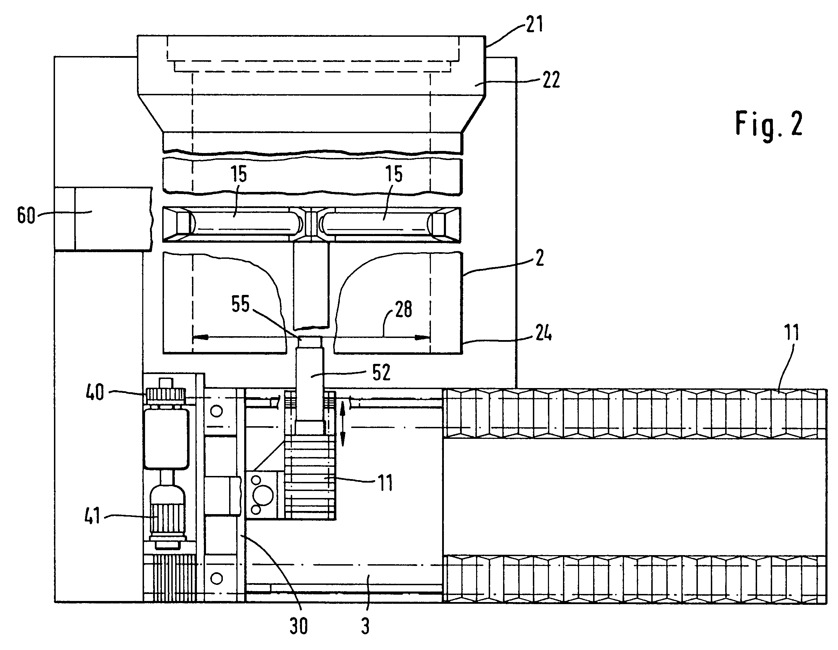

Nach Abschluß der Mittelpunktsermittlung wird die Meßeinrichtung 52 aus dem Rohr herausgezogen und der Schlitten 3 mit dem Ständer 30 in die Stellung der Fig. 3 und 4 gebracht. Bei dieser Bewegung nimmt das Fräswerkzeug eine zurückgezogene Stellung ein, wie aus der Fig. 2 hervorgeht.

Die Steuerung 7 ermittelt nun aus der Lage der Mittelachse 26 und dem gewünschten Außendurchmesser 29 des Betonrohres die Lage des Fräswerkzeuges 40, die durch entsprechende Steuerung des Motors 19 und auch des Motors 33 eingestellt wird, wobei natürlich die Abmessungen des Fräswerkzeuges ebenso zu berücksichtigen sind wie die Wandstärke des Rohres. Durch Beaufschlagung des Motors 43 wird das Fräswerkzeug in Arbeitsstellung gebracht. Die CNC-Steuerung steuert nun das Fräswerkzeug durch sinngemäße Steuerung der Motoren 19 und 33 auf einer Kreisbahn um das Ende 20 des Betonrohres. Das Fräswerkzeug kann dabei das Betonrohr mehrmals umwandern, bis schließlich das gewünschte Maß des Außendurchmessers des Endes 20 erhalten wird.

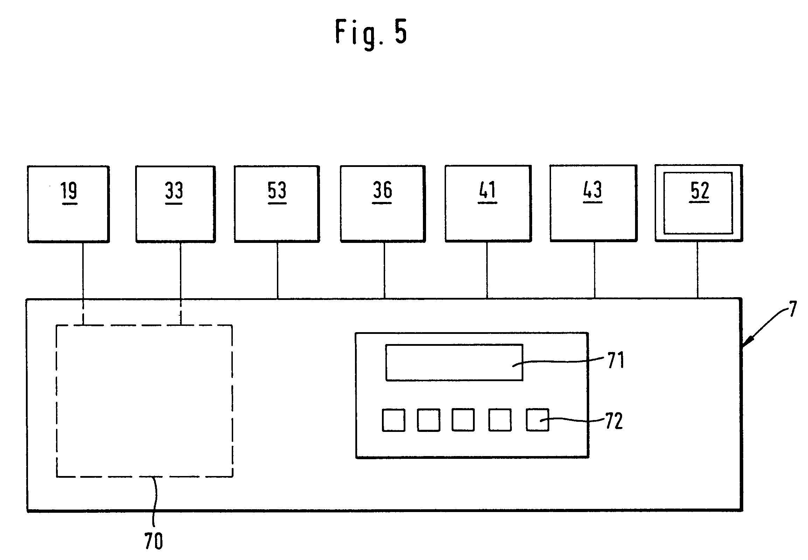

Die Fig. 5 zeigt schematisch eine Steuereinrichtung 7, die die CNC-Steuerung aufnimmt. Die Steuervorrichtung 7 dient zur Steuerung der Motoren 19 und 33 für die Bewegung des Fräswerkzeuges. An die Steuereinrichtung 7 sind sämtliche Motoren angeschlossen, also neben den Motoren 19 und 33 auch die Motoren 53 zur Verschiebung der Meßeinrichtung 52 sowie der Motor 36 Für die Höhenbewegungen der Meßeinrichtung 52 und auch der Antriebsmotor 41 für das Fräswerkzeug 40. Mittels der Tastatur 72 können die gewünschten Werte eingegeben werden, die am Display 71 ablesbar sind. An die Steuereinrichtung 7 sind selbstverständlich auch die Meßelemente 55 der Meßeinrichtung 52 angeschlossen.

## Patentansprüche

1. Vorrichtung zum Bearbeiten von Betonröhren, insbesondere zum Rundfräsen des Endbereiches eines Rohres, der in eine Endmuffe eines Nachbarrohres einschiebbar ist, **gekennzeichnet durch** eine auf einem Maschinengestell (1) angeordnete Meßeinrichtung (52), die in das Ende (20) des ruhenden Rohres (2) hineinragt und deren Meßelemente (55) in mindestens drei radialen Richtungen die Distanz zur Rohrinnenwandung und damit durch Mittelbildung die Höhen- und Seitenlage der Rohrmittelachse (26) messen, und ferner **gekennzeichnet durch** ein Fräswerkzeug (40), das in zwei Richtungen auf einem Maschinengestell (1) beweglich ist, und zwar in Abhängigkeit von einer CNC-Steuerung, der die Ausgangswerte von der Meßeinrichtung (52) zugeleitet sind, um den Außenumfang des Betonrohres (2) zu bearbeiten.

2. Vorrichtung nach Anspruch 1, **dadurch gekennzeichnet, daß** das Maschinengestell (1) der Meßeinrichtung (52) auch das Fräswerkzeug (40) trägt.

3. Vorrichtung nach einem oder beiden der vorhergehenden Ansprüche, **dadurch gekennzeichnet, daß** auf einem Untergestell (10) des Maschinengestelles (1) ein Schlitten (3) horizontal und radial zur Mittelachse (26) des Betonrohres (2) verschiebbar ist, daß der Schlitten (3) einen Ständer (30) besitzt mit senkrechten Führungen (32,35) für das Fräswerkzeug (40) und für die Meßeinrichtung (52).

4. Vorrichtung nach Anspruch 3, **dadurch gekennzeichnet, daß** sowohl das Fräswerkzeug (40) als auch die Meßeinrichtung (52) parallel zur Mittelachse (26) des Betonrohres verschiebbar sind.

5. Vorrichtung nach Anspruch 1, **dadurch gekennzeichnet, daß** die Meßeinrichtung (52) Meßelemente (55) zur Ultraschallmessung aufweist.

6. Vorrichtung nach Anspruch 1, **dadurch gekennzeichnet, daß** die Meßelemente (55) der Meßeinrichtung (52) in zwei zueinander senkrechten Richtungen (27,28) die Abstände zur Rohrinnenwandung messen.

7. Vorrichtung nach Anspruch 3, **dadurch gekennzeichnet, daß** der Ständer (30) des verschiebbaren Schlittens (3) auf seiner Vorderseite und seiner Rückseite je eine Führungsbahn (32 und 35) für das Fräswerkzeug (40) und die Meßeinrichtung (52) aufweist.

8. Vorrichtung nach Anspruch 1, **dadurch gekennzeichnet, daß** alle Antriebsmotoren (19,33,55,36,41,53) für die Bewegungen des Fräswerkzeuges (40) und der Meßeinrichtung (52) in allen Richtungen ebenso wie die Meßeinrichtung (52) an eine gemeinsame Steuereinrichtung (7), die auch die CNC-Steuerung umfaßt, angeschlossen sind.
